(19) **Europäisches Patentamt**

**European Patent Office**

**Office européen des brevets**

(11) **EP 1 034 632 B1**

(12) **EUROPEAN PATENT SPECIFICATION**

(45) Date of publication and mention
of the grant of the patent:
**22.09.2004  Bulletin 2004/39**

(51) Int Cl.⁷: **H04J 3/06**
// (H04L7/02, 25:38)

(21) Application number: **98956821.7**

(22) Date of filing: **19.11.1998**

(86) International application number:
**PCT/DK1998/000501**

(87) International publication number:
**WO 1999/027669 (03.06.1999 Gazette 1999/22)**

(54) **A METHOD OF TRANSFERRING DATA SIGNALS AS WELL AS A METHOD AND AN APPARATUS FOR DESYNCHRONIZING PDH SIGNALS**

VERFAHREN ZUR ÜBERTRAGUNG VON DATENSIGNALEN SOWIE VERFAHREN UND VORRICHTUNG ZUR DESYNCHRONISIERUNG VON PDH SIGNALEN

PROCEDE DE TRANSFERT DE SIGNAUX DE DONNEES AINSI QUE PROCEDE ET APPAREIL DE DESYNCHRONISATION DE SIGNAUX PDH

(84) Designated Contracting States:
**DE FI FR GB IT**

(30) Priority: **20.11.1997  DK 132697**

(43) Date of publication of application:
**13.09.2000  Bulletin 2000/37**

(73) Proprietor: **TELLABS DENMARK A/S**
**2750 Ballerup (DK)**

(72) Inventor: **NIELSEN, Anders, Boje**
**DK-2740 Skovlunde (DK)**

(74) Representative: **Boesen, Johnny Peder et al**
**Zacco Denmark A/S**
**Hans Bekkevolds Allé 7**
**2900 Hellerup (DK)**

(56) References cited:
**EP-A1- 0 535 698          EP-A1- 0 549 125**
**EP-A2- 0 742 653          WO-A1-94/27386**
**US-A- 4 996 698           US-A- 5 337 334**

## Description

The invention relates to a method of transferring data signals from a first PDH (Plesiochronous Digital Hierarchy) device via an SDH (Synchronous Digital Hierarchy) network to a second PDH device, wherein a clock signal is regenerated in the second PDH device on the basis of the data signals received, and wherein pointer adjustments may occur in the SDH network which are compensated in the second PDH device with a temporary frequency deviation in said regenerated clock signal. The invention moreover relates to a method and an apparatus for desynchronizing PDH signals which have been transferred via an SDH network in which pointer adjustments may occur, said pointer adjustments being compensated in the desynchronization with a temporary frequency deviation in a clock signal regenerated on the basis of the received PDH signals.

An SDH network is frequently used for transferring data signals from one PDH device to another. In the SDH network, all network elements in a synchronous state will be synchronized to a common reference clock signal, whereas the embedded PDH signals cannot be expected to be synchronous with the SDH network. In the SDH network element in which the PDH signals are embedded, this takes place by means of an associated PDH clock signal, and the signals are then transmitted in the network as pure SDH signals. Unpacking of the PDH signals takes place in the receiving network element, and in connection with this the associated PDH clock signal is regenerated. After suitable low-pass filtering, the regenerated PDH clock signal will substantially correspond to the original clock signal in the network element in which the signals were embedded; but small variations may occur, e.g. in the form of phase variations between the original PDH clock signal and the regenerated PDH clock signal.

In certain applications, however, e.g. in the transmission of TV signals or signals to a GSM base station, a more accurate clock signal is required at the receiver side, capable of ensuring that the receiver device may be synchronized to the device at the transmitter side, and a special reference clock signal therefore has to be transferred. Such a reference clock signal has previously been transferred via a separate network to ensure the quality. If, on the other hand, the reference clock signal is transferred via the SDH network, as described above, a sufficiently good quality of the signal cannot be obtained at the receiver side. The reason is primarily that pointer adjustments may occur in the SDH network.

SDH networks are based on one or more stable clock signals. In spite of the fact that very stable references are present in the network, differences between phase and frequency of the references may occur. The network elements in such a communications network must be capable of tolerating these variations in phase and frequency, without data in the form of communications signals being lost. This may be ensured by performing pointer adjustments where a number of bits or bytes may be added or removed in the data flow.

Differences in phase or frequency may occur for several reasons. Even when the network is in a synchronous state, phase deviations between various points in the network may occur because of e.g. temperature impacts on the communications channels between the nodes of the network. These deviations take place very slowly, e.g. with a period of a day, and a relatively long time will therefore elapse between the pointer adjustments triggered because of these deviations.

If, on the other hand, all the network elements of a network are not synchronized to the same reference, the network is in a plesiochronous state, and frequency deviations may occur between the individual network elements. A constant frequency difference will involve a constantly increasing phase difference, and pointer adjustments will therefore occur relatively frequently.

In connection with the regeneration of PDH clock signals in a receiving SDH network" element it will be attempted to smooth the effect of the pointer adjustments performed in the SDH network by low-pass filtering the phase jumps which they have caused. This may take place e.g. by inputting the incoming data in a buffer with a (jitter) clock signal derived from the data signal and then outputting them again with a stabilized clock signal, which has been generated by passing the jitter clock signal through a phase-locked loop. This is tantamount to low-pass filtering of the jitter effect, as phase variations between the incoming clock signal and the stabilized clock signal are low-pass filtered in the phase-locked loop.

Several desynchronizers adapted to smooth the effect of the pointer adjustments are known. EP 535 698 describes a desynchronizer that can accommodate up to six consecutive pointer adjustments by means of an elastic store. EP 549 125 describes a desynchronizer having an improved jitter performance resulting from the use of a dynamic bit leaking arrangement. Also US 4 996 698 describes a way of smoothing the regenerated clock signal so that jitter is kept below certain limits.

Owing to the pointer adjustments which take place relatively frequently, the smoothing of the effect of each pointer adjustment must take place relatively rapidly, thereby ensuring that the effect of one pointer adjustment has been smoothed before the next pointer adjustment occurs. The relatively rapid smoothing, however, means that the stabilized clock signal will still include a certain residual jitter, which makes it impossible to maintain the synchronization in the following PDH synchronization device, since some applications, as mentioned above, require that a reference clock signal can be regenerated with great accuracy. A GSM base station, e.g., requires an accuracy of the reference clock signal of $\pm$ 0.050 ppm, corresponding to $\pm$ 50 nsec per second.

A known method trying to solve this problem comprises replacing the PDH reference clock signal in the SDH network element, which unpacks the PDH signal, by the synchronous clock signal from the SDH network element concerned in a so-called retiming circuit. While this may provide a reference clock signal without residual jitter, it requires that the PDH signals are synchronized to the SDH clock signal in the network element in which they are embedded in the SDH system, and, normally, this condition cannot be expected to be satisfied, or, at any rate, it puts severe limits to the application. For the PDH signal to be adapted to the new clock signal, the retiming circuit must comprise a frame buffer and be capable of introducing frame slips. The frame buffer causes the transferred signals to be delayed by 125 μsec corresponding to a frame, and the frame slip may cause certain signals, such as e.g. CRC4 signals, to be lost in the PDH synchronization unit. In this solution, pointer adjustments from the SDH network accumulate in the buffer of the retiming circuit as the circuit maintains a constant data rate into the PDH device. When the SDH network is not in a synchronous state, the buffer may thus overflow, so that data losses may occur in connection with the frame slip.

Accordingly, an object of the invention is to provide a method of the type mentioned in the opening paragraph in which jitter in the regenerated clock signal, at least when the SDH network is in a synchronous state, may be reduced to a level at which the synchronization in the subsequent PDH synchronization device may be maintained.

This is achieved according to the invention in that a first pointer adjustment is compensated with a first, relatively low frequency deviation, and that, if one or more additional pointer adjustments occur before the compensation of the first pointer adjustment has been completed, compensation is subsequently performed with a second, relatively high frequency deviation.

Compensation of a first pointer adjustment, which thus occurs when the compensation of any previous pointer adjustments has been completed, with a relatively low frequency deviation ensures that the phase variations in the regenerated clock signal may be reduced. These situations occur e.g. in pointer adjustments which are performed because of temperature impacts on the communications channels of the network. However, if pointer adjustments occur at so short intervals that they cannot be compensated with the low frequency variation, the reason is that the SDH network is no longer in a synchronous state, and in that case it will not be possible to maintain the synchronization for the sensitive PDH device anyhow. In this situation, compensation may be performed with a higher frequency deviation without further problems so as to avoid buffer overflow.

The regenerated clock signal may be produced by means of an analog phase-locked loop, as defined in claim 2, or by means of a digital phase-locked loop, as defined in claim 3.

In the analog phase-locked loop in which a control signal, which is indicative of a phase difference between the regenerated clock signal and the received data, is fed to a voltage-controlled oscillator, the relatively low frequency deviation is produced by limiting the said control signal to a given limit value, while the relatively high frequency deviation is produced by allowing the control signal to exceed said given limit value.

In the digital phase-locked loop, in which a control word, which is capable of assuming one of a plurality of predetermined discrete values in response to a phase difference between the regenerated clock signal and a reference signal derived from the received data, is fed to a numerically controlled oscillator, and in which the control word assumes a nominal value when said phase difference is numerically smaller than a predetermined value, and assumes one of the other values when the phase difference is numerically greater than the predetermined value, the relatively high frequency deviation is produced in that said control word assumes one of the other values continuously, while the relatively low frequency deviation is produced by modulating the control word so that it assumes one of the other values in subperiods, while it assumes the nominal value in intermediate periods.

In an expedient embodiment of the invention, which is defined in claim 4, the relatively low frequency deviation is less than ± 0.050 ppm, it being then possible to satisfy the accuracy requirements of the reference clock signal that apply to e.g. GSM base stations. When, moreover, the relatively high frequency deviation is higher than ± 4.6 ppm, as stated in claim 5, it is ensured that it is possible to compensate the pointer adjustments which occur when the SDH network is not in a synchronous state, since, according to the SDH specifications, these may maximally occur at such a rate as allows them to be compensated with this frequency deviation.

As mentioned, the invention also relates to a corresponding method of desynchronizing PDH signals which have been transferred via an SDH network. When, as stated in claim 6, a first pointer adjustment is compensated with a first relatively low frequency deviation, and, if one or more additional pointer adjustments occur before the compensation of the first pointer adjustment has been completed, compensation is subsequently performed with a second, relatively high frequency deviation, advantages corresponding to those mentioned above are obtained.

The invention moreover relates to an apparatus for desynchronizing PDH signals which have been transferred via an SDH network.

When the apparatus is adapted to compensate a first pointer adjustment with a first, relatively low frequency deviation, and, if one or more additional pointer adjustments occur before the compensation of the first pointer adjustment has been completed, subsequently to compensate with a second, relatively high frequency deviation, the advantages described above are likewise obtained.

The apparatus may comprise an analog phase-locked loop, as defined in claim 8, or a digital phase-locked loop, as defined in claim 9, for producing the regenerated clock signal.

The analog phase-locked loop is adapted to feed a control signal, which is indicative of a phase difference between the regenerated clock signal and the received data, to a voltage-controlled oscillator, and to produce the relatively low frequency deviation by limiting said control signal to a given limit value and to produce the relatively high frequency deviation by allowing the control signal to exceed said given limit value.

The digital phase-locked loop is adapted to feed a control word, which is capable of assuming one of a plurality of predetermined discrete values in response to a phase difference between the regenerated clock signal and a reference signal derived from the received data, to a numerically controlled oscillator, said control word being capable of assuming a nominal value when said phase difference is numerically smaller than a predetermined value, and of assuming one of the other values when the phase difference is numerically greater than the predetermined value. The apparatus is adapted to produce the relatively high frequency deviation by allowing said control word to assume one of the other values continuously, and to produce the relatively low frequency deviation by modulating the control word, so that it assumes one of the other values in subperiods, while it assumes the nominal value in intermediate periods.

In an expedient embodiment of the apparatus, which is defined in claim 10, the relatively low frequency deviation is less than $\pm 0.050$ ppm, it being then possible to satisfy the accuracy requirements of the reference clock signal that apply to e.g. GSM base stations. When, moreover, the relatively high frequency deviation is higher than $\pm 4.6$ ppm, as defined in claim 11, it is ensured that it is possible to compensate the pointer adjustments which occur when the SDH network is not in a synchronous state, since, according to the SDH specifications, these may maximally occur at such a rate as allows them to be compensated with this frequency deviation.

The invention will now be described more fully below with reference to the drawing, in which

fig. 1 shows a network in which the invention may be applied,

fig. 2 shows a first embodiment of a synchronization circuit according to the invention,

fig. 3 shows an alternative embodiment of a synchronization circuit according to the invention,

fig. 4 shows an example of phase variations that may occur in a single pointer adjustment, and

fig. 5 shows an example of phase variations when several pointer adjustments occur successively.

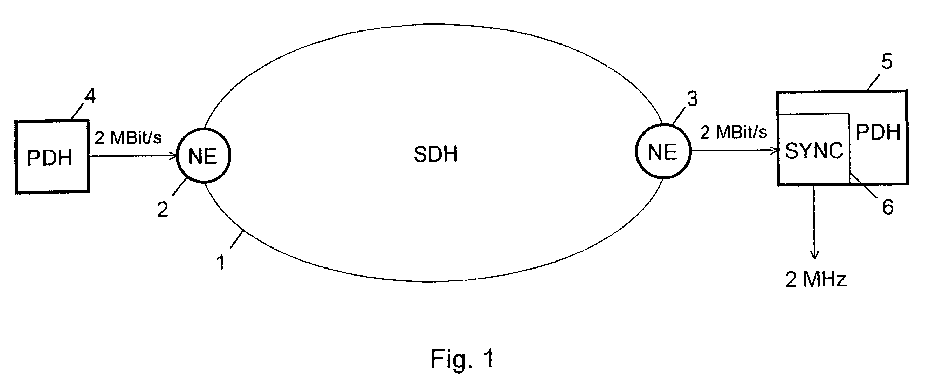

Fig. 1 shows an example of a network in which the invention may be applied. An SDH network 1 consists of a plurality of network elements, of which two network elements 2, 3 are shown in the figure. In the network element 2, which may e.g. be a multiplexer, signals from a PDH device 4 are loaded into the SDH network 1 to be carried via this to a second network element 3, where the signals are taken out again for a second PDH device 5. The network element 3 may e.g. be an Add and Drop Multiplexer (ADM) or a Digital Cross Connect (DXC). The transmission may e.g. take place as an STM-1 frame in the SDH network. The PDH signals, which, in the network element 2, are loaded into the SDH network, may e.g. have a data rate of 2 Mbit/s, and they may be used inter alia for transferring a reference clock signal to a GSM base station, which will then be connected to the PDH device 5.

The PDH signals of 2 Mbit/s from the STM-1 frame are unpacked in the PDH device 5. For the reference clock signal to be regenerated with sufficient accuracy, the PDH device 5 includes a synchronization circuit 6, which first generates a clock signal on the basis of the unpacked data signals, said clock signal containing gaps inter alia because of pointer adjustments performed in the SDH network, and then smoothes these gaps so as to create a stable clock signal of 2 MHz. This clock signal will correspond to the reference clock signal which, in the network element 2, was loaded into the SDH network, and it may e.g. be fed to the mentioned GSM base station.

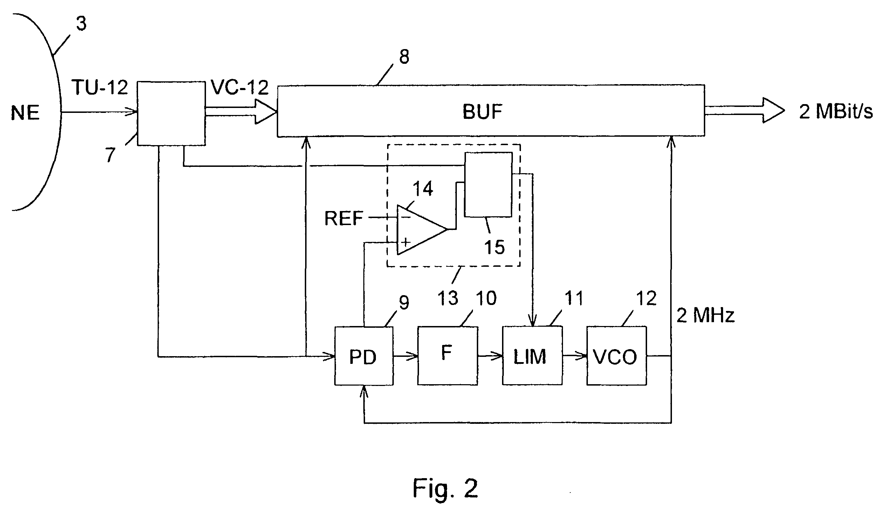

The synchronization circuit 6 will typically comprise a buffer and a phase-locked loop. Fig. 2 shows an embodiment of such a circuit using a traditional analog phase-locked loop. The circuit receives the data signals, which may e.g. be so-called TU-12 signals, from the network element 3. The TU-12 signals are unpacked to VC-12 signals in a demapping circuit 7, with simultaneous separation of overhead signals from the data signals proper. Furthermore, a clock signal is generated in the circuit 7 on the basis of the incoming data, a clock pulse being generated in principle for each data byte in the unpacked VC-12 signals. If pointer adjustments have been performed in the SDH network, this will appear from the overhead signals, and, in dependence on this, the circuit 7 may therefore add or remove clock pulses in the generated clock signal, which thereby becomes irregular, as the clock frequency will vary in step with the addition or removal of clock pulses. This frequency variation is called jitter.

The unpacked VC-12 signals are input via a data bus in a buffer 8 by means of the clock signal which is generated in the circuit 7 and is possibly vitiated by jitter, so that the input will take place at an irregular rate depending on pointer adjustments, if any. The data buffer 8 may be constructed as a ring buffer and may e.g.

be of 12 bytes.

To perform smoothing of the irregular rate the jitter clock signal is passed through a phase-locked loop, which, as shown in fig. 2, may consist of a phase detector 9, a filter 10, a limiter circuit 11 and a voltage-controlled oscillator 12. The phase detector 9, the filter 10 and the voltage-controlled oscillator 12 are well-known in a phase-locked loop, while the limiter circuit 11 will be described more fully below. A new clock signal will appear on the output of the voltage-controlled oscillator 12, said new clock signal having an approximately constant frequency which corresponds to the mean frequency of the jitter clock signal.

The phase detector 9 measures the phase difference between the jitter clock signal and the smoothed clock signal, and then a control signal, which controls the voltage-controlled oscillator 12, is generated via the filter 10 and the limiter circuit 11.

Smoothing of the irregular rate of the data signals then takes place in that the data input in the buffer 8 are output from the buffer again by means of the smoothed clock signal. In the case of VC-12 signals, the smoothed clock signal will typically have a frequency of 264 kHz; but since, normally, the signals are subsequently to be processed bitwise, the output signal from the voltage-controlled oscillator 12 will have a frequency eight times as high, viz. 2.112 MHz, which will then merely be divided by a factor of 8 before being used for the output of data from the buffer 8. The clock signal of 2.112 MHz is normally just called a 2 MHz signal and is therefore designated as such in the figure. The data signals may then be processed further, e.g. in the subsequent PDH device 5. The data signals of 2 Mbit/s, which are output from the buffer, may contain the previously mentioned reference clock signal for e.g. a GSM base station.

When pointer adjustments do not occur, the two input signals to the phase detector 9 will substantially be uniform. Therefore, substantially no variations will take place in the output signal of the phase detector and thereby not in the control signal to the voltage-controlled oscillator 12 either. The limiter circuit 11, which is adapted to limit the fluctuations that may occur in the control signal to the voltage-controlled oscillator, will thus have no influence in this situation.

The limiter circuit 11 is controlled by a detector circuit 13 which consists of a comparator 14 and a latch circuit 15. The comparator 14 is adapted to emit logical "1" to one input of the latch circuit 15 when the output signal from the phase detector 9 exceeds a fixed value REF, which will just be the case while a pointer adjustment is being smoothed. The other input of the latch circuit 15 is connected to the demapping circuit 7 and is logical "1" for a short period each time a pointer adjustment occurs. The demapping circuit 7 emits this short signal before it adds or removes a clock pulse in the generated clock signal. The latch circuit 15 is adapted to emit logical "0" when a pointer adjustment occurs, while a logical "1" from the comparator tells that the phase-locked loop is already in the process of smoothing a pointer adjustment. The latch circuit 15 emits logical "1" in all other situations. Logical "1" causes the limiter circuit 11 to limit the fluctuations in the control signal to the oscillator 12 and thereby its frequency change, while logical "0" puts no limitations on the control signal so that the frequency of the oscillator may vary freely.

In the above-mentioned situation where no pointer adjustments occur, the detector circuit 13 will thus cause the limiter circuit 11 to limit the control signal to the voltage-controlled oscillator 12 to a predetermined value; but since, as mentioned, substantially no variations in this control signal occur, the limitation will be without importance.

If a single pointer adjustment now occurs, the demapping circuit 7 will emit a short signal to the other input of the latch circuit 15; but since the phase detector 9 does not yet detect a phase difference, the detector circuit 13 will thus still cause the limiter circuit 11 to limit the control signal to the voltage-controlled oscillator 12 to the predetermined value. The phase detector 9 then detects a phase difference because of the removed or added clock pulse and therefore emits a control signal to the voltage-controlled oscillator 12 telling it to change frequency. Because of the limiter circuit 11, the variation of the control signal is limited, however, and the frequency variation will therefore also be limited to a value which is acceptable to the subsequent PDH device. The smoothing will of course take a correspondingly longer time because of the limited frequency variation. As the smoothing proceeds, the phase difference between the jitter clock signal and the smoothed clock signal diminishes, and the oscillator 12 will revert to the original frequency.

If, however, an additional pointer adjustment occurs before the smoothing of the first one has been completed, the latch circuit 15 will emit logical "0", and the limiter circuit 11 will therefore no longer put limitations on the control signal to the oscillator 12. The full control signal from the phase detector 9 and the filter 10 can therefore now be fed to the oscillator, which will now smooth the phase difference with a considerably greater frequency change. The smoothing can hereby take place sufficiently rapidly for it to be completed before the next pointer adjustment occurs, as these can now be expected to occur at short intervals, e.g. because of missing synchronization somewhere in the SDH network.

It is hereby ensured that a single pointer adjustment, caused e.g. by temperature impacts on the communications channels in the SDH network, may be compensated with a small frequency deviation, ensuring that a reference clock signal can still be passed on to the subsequent PDH device with sufficient accuracy. If, however, pointer adjustments occur at so short intervals that they cannot be compensated with the low frequency variation, this is caused by the fact that the SDH network is no longer in a synchronous state, and in that case it will not be possible to maintain the synchronization for the sensitive PDH device anyhow. Therefore, in this situation, compensation may be performed with a higher frequency deviation without further problems, thereby avoiding buffer overflow.

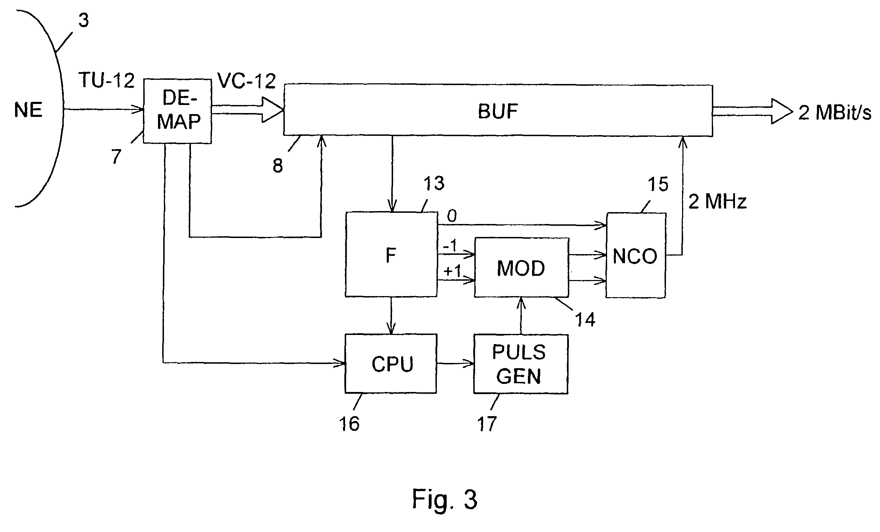

Fig. 3 shows an alternative embodiment of a synchronization circuit in which a digital phase-locked loop is used instead of a traditional analog phase-locked loop, as described above. The mode of operation of the demapping circuit 7 and the buffer 8 is the same as for the embodiment of fig. 2, and here too smoothing of the irregular rate is performed by passing the jitter clock signal through a phase-locked loop, which, as shown in the figure, may consist of a filter 13, a modulator 14 and a numerically controlled oscillator 15. In principle, a phase detector must be provided like in the case of the analog loop; but it is formed by the buffer 8 here, which, as mentioned above, may e.g. consist of 12 storage locations or bytes, each having the size of 8 bits and indexed with an address. The difference between the address to which input takes place and the address from which output takes place, indicates the filling degree of the buffer. This value of the filling degree is indicative of the phase difference between the two clock signals, and instead of comparing these in a traditional phase detector, a signal from the buffer 8, which indicates its filling degree, may therefore be fed to the filter 13.

On the basis of this signal, the filter 13 generates a control word which, if the modulator 14 is disregarded, controls the numerically controlled oscillator 15. The oscillator 15 may be implemented as a programmable divider which, depending on the control word, can divide a system clock signal having a higher frequency by a factor which is determined by the control word. The control word may e.g. assume the three values {-1, 0, +1}. If a system clock signal of 19.44 MHz is used, the oscillator may be adapted to divide by a factor of 9.204545 corresponding to the desired frequency of 2.112 MHz when the control word is 0. When the control word is -1, because the filter 13 has detected that the smoothed clock frequency is greater than the mean frequency of the jitter clock signal, the oscillator can divide by a factor of 9.204611 corresponding to a frequency of 2.111985 MHz. When the control word is +1, division may correspondingly take place by a factor of 9.204482 corresponding to a frequency of 2.112015 MHz.

The oscillator can just emit these discrete frequencies in principle. The two frequencies of 2.111985 MHz and 2.112015 MHz, respectively, correspond to a deviation from the desired frequency of about 7 ppm, which is sufficient for smoothing the effect of pointer adjustments, which occur at short intervals because of missing synchronization in a part of the SDH network. The frequency deviation, however, is much greater than the deviation of $\pm$ 0.050 ppm in the reference clock signal that can be accepted by e.g. a GSM base station. The frequency of the numerically controlled oscillator must therefore be capable of being adjusted in considerably smaller jumps than is possible with the frequencies mentioned above.

This is achieved by inserting the modulator 14 between the filter 13 and the oscillator 15. Instead of passing the control word of -1 or +1, emitted by the filter 13, directly to the oscillator 15, as described before, it is now passed to the modulator 14, in which it is modulated with a square-wave signal from a pulse generator 17. The pulse generator 17 is controlled from a processor 16. The square-wave signal has a fixed period of e. g. 256 msec, whereas the pulse width is variable in steps of e.g. 1 msec. The square-wave signal from the pulse generator 17 is applied to the modulation input of the modulator and thereby determines the emitted control word. When the square-wave signal is high, the control word -1 or +1 is emitted, while the control word 0 is emitted in the gaps between the pulses. This means that the control word -1 or +1 will just be emitted for a fraction of the time, and the oscillator 15 will use the higher or the lower frequency also just for a fraction of the time, while it will continue to use the nominal frequency for the rest of the time.

This means in practice that the oscillator will emit a frequency which differs considerably less from the nominal frequency than the previously mentioned difference between two adjacent frequencies. For example, with the control word +1 the frequency may here be selected in jumps of 1/256 of the difference between 2.111985 MHz and 2.112000 MHz, corresponding to a frequency deviation of about 0.028 ppm, which is less than the 0.050 ppm which can maximally be accepted by the sensitive PDH device.

When the resulting frequency differs less from the nominal one than before, the smoothing of a pointer adjustment will of course take a longer time than before.

The pulse width of the square-wave signal emitted by the pulse generator 17 is controlled from a processor 16, as mentioned before. This decides on the basis of information from the demapping circuit 7 and the filter 13, respectively, whether or not the control word is to be modulated, and if so, then with which pulse width.

If a single pointer adjustment occurs, the processor 16 will decide to modulate the control word so that the effect is smoothed with the small frequency deviation. The smoothing will of course take a correspondingly longer time because of the limited frequency variation. As the smoothing proceeds, the buffer fill diminishes, which corresponds to the phase difference between the jitter clock signal and the smoothed clock signal, and the oscillator 15 will revert to the original frequency.

If, however, an additional pointer adjustment occurs before the smoothing of the first one has been completed, the processor will stop modulating the control word, and the oscillator will now smooth the phase difference with the considerably greater frequency change. The smoothing can hereby take place sufficiently rapidly for it to be completed before the next pointer adjustment takes place, as these can now be expected to occur at short intervals, e.g. because of missing synchronization somewhere in the SDH network.

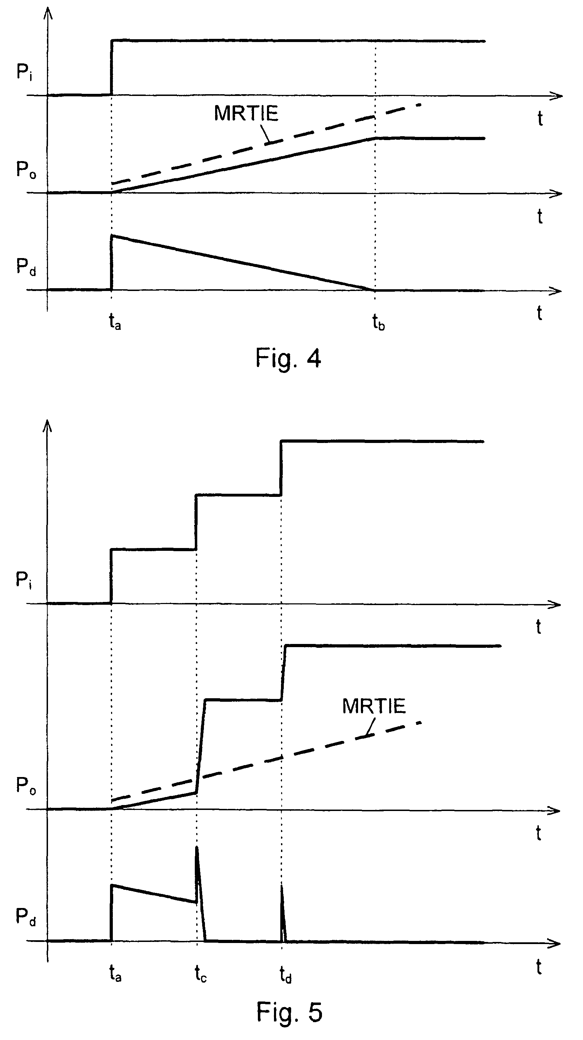

Fig. 4 shows an example of the phase variations which may occur in the circuit shown in fig. 3 when a single pointer adjustment occurs in the SDH network. At the top of the figure, $P_i$ indicates the phase jump which occurs in the jitter clock signal when a pointer adjustment occurs at the time $t_a$, while $P_o$ correspondingly shows the phase variation in the smoothed clock signal. The curve MRTIE indicates a limit which the variation may not exceed, and it is given by:

$$MRTIE = 50 \cdot 10^{-9} \cdot S + \text{offset},$$

where offset < 0.5 μsec and S < 130 sec, as there will be at least 130 sec between these individual pointer adjustments. Finally, $P_d$ shows the difference between the two signals $P_i$ and $P_o$, which corresponds to the buffer fill. It should be noted that the curve for $P_d$ will not be a continuous curve in practice, but a stepped curve, as the buffer fill constitutes an integer number of bytes. It will be seen from the curves that the variation in the smoothed clock signal keeps below the limit given by MRTIE, and the data signals emitted from the buffer will thus satisfy the previously mentioned requirements. The effect of the pointer adjustment has been smoothed at the time $t_b$, and the jitter clock signal and the smoothed clock signal are again in phase.

Fig. 5 correspondingly shows the situation when several successive pointer adjustments occur at relatively short intervals, as will e.g. be the case when the SDH network is not in a synchronous state. The first pointer adjustment occurs at the time $t_a$, and in the beginning the curves correspond completely to fig. 4. At the time $t_c$, where the first adjustment has not been smoothed yet, the next pointer adjustment occurs, and smoothing is now performed with the greater frequency deviation to avoid buffer overflow. The curve MRTIE is hereby exceeded; but this is accepted, since in this situation it will not be possible to maintain the synchronization of the sensitive PDH equipment anyhow. A pointer adjustment occurs again at the time $t_d$. And it is smoothed in the figure by the greater frequency variation too. Since the previous adjustment is smoothed here, it may also be decided to have this smoothed with the small frequency deviation, since it is not known whether it might be the last one of a plurality of adjustments.

Although a preferred embodiment of the present invention has been described and shown, the invention is not restricted to it, but may also be embodied in other ways within the scope of the subject-matter defined in the following claims.

## Claims

1. A method of transferring data signals from a first PDH device (4) via an SDH network (1) to a second PDH device (5), wherein a clock signal is regenerated in the second PDH device (5) on the basis of the received data signals, and wherein pointer adjustments may occur in the SDH network (1) which are compensated in the second PDH device (5) with a temporary frequency deviation in said regenerated clock signal,
**characterized in that** a first pointer adjustment is compensated with a first, low frequency deviation, and that, if one or more additional pointer adjustments occur before the compensation of the first pointer adjustment has been completed, compensation is subsequently performed with a second, high frequency deviation.

2. A method according to claim 1, **characterized in that** the regenerated clock signal is produced by means of an analog phase-locked loop, a variable control signal, which is indicative of a phase difference between the regenerated clock signal and the received data, being fed to a voltage-controlled oscillator (12), and **that** the low frequency deviation is produced by limiting the variation of said control signal to a given limit value, while the high frequency deviation is produced by allowing the variation of the control signal to exceed said given limit value.

3. A method according to claim 1, **characterized in that** the regenerated clock signal is produced by means of a digital phase-locked loop, a control word, which is capable of adopting one of a plurality of predetermined discrete values in response to a phase difference between the regenerated clock signal and a reference signal derived from the received data, being fed to a numerically controlled oscillator (15), said control word adopting a nominal value when said phase difference is smaller than a predetermined value, and adopting one of the other values when the phase difference is numerically greater than the predetermined value,
and **that** the high frequency deviation is produced by said control word adopting one of the other values continuously, while the low frequency deviation is produced by modulating the control word so that it adopts one of the other values in subperiods, while it adopts the nominal value in intermediate periods.

4. A method according to claims 1-3, **characterized in that** the low frequency deviation is less than ± 0.050 ppm.

5. A method according to claims 1-4, **characterized in that** the high frequency deviation is higher than ± 4.6 ppm.

6. A method of desynchronizing PDH signals which have been transferred via an SDH network (1) in which pointer adjustments may occur, said pointer adjustments being compensated in the desynchronization with a temporary frequency deviation in a clock signal regenerated on the basis of the received PDH signals, **characterized in that** a first pointer adjustment is compensated with a first, low frequency deviation, and **that**, if one or more additional pointer adjustments occur before the compensation of the first pointer adjustment has been completed, compensation is subsequently performed with a second, high frequency deviation.

7. An apparatus for desynchronizing PDH signals which have been transferred via an SDH network (1) in which pointer adjustments may occur, said pointer adjustments being compensated in the desynchronization with a temporary frequency deviation in a clock signal regenerated on the basis of the received PDH signals, **characterized in that** it is adapted to compensate a first pointer adjustment with a first, low frequency deviation, and, if one or more additional pointer adjustments occur before the compensation of the first pointer adjustment has been completed, it is adapted to subsequently compensate with a second, high frequency deviation.

8. An apparatus according to claim 7, **characterized in that** it comprises an analog phase-locked loop for producing the regenerated clock signal, said phase-locked loop being adapted to feed a variable control signal, which is indicative of a phase difference between the regenerated clock signal and the received data, to a voltage-controlled oscillator (12), and **that** it is adapted to produce the low frequency deviation by limiting the variation of said control signal to a given limit value and to produce the high frequency deviation by allowing the variation of the control signal to exceed said given limit value.

9. An apparatus according to claim 7, **characterized in that** it comprises a digital phase-locked loop for producing the regenerated clock signal, said phase-locked loop being adapted to feed a control word, which is capable of adopting one of a plurality of predetermined discrete values in response to a phase difference between the regenerated clock signal and a reference signal derived from the received data, to a numerically controlled oscillator (15), said control word being capable of adopting a nominal value when said phase difference is numerically smaller than a predetermined value, and of adopting one of the other values when the phase difference is numerically greater than the predetermined value, and **that** it is adapted to produce the high frequency deviation by allowing said control word to adopt one of the other values continuously, and to produce the low frequency deviation by modulating the control word so that it adopts one of other values in subperiods, while it adopts the nominal value in intermediate periods.

10. An apparatus according to claims 7-9, **characterized in that** the low frequency deviation is less than ± 0.050 ppm.

11. An apparatus according to claims 7-10, **characterized in that** the high frequency deviation is higher than ± 4.6 ppm.


**Patentansprüche**

1. Verfahren zum Übertragen von Datensignalen von einem ersten PDH-Gerät (4) über ein SDH-Netzwerk (1) zu einem zweiten PDH-Gerät (5), bei dem in dem zweiten PDH-Gerät (5) auf der Grundlage der empfangenen Datensignale ein Taktsignal regeneriert wird und bei dem Pointeranpassungen in dem SDH-Netzwerk (1) auftreten können, die mit einer temporären Frequenzabweichung in dem regenerierten Taktsignal im zweiten PDH-Gerät (5) kompensiert werden, **dadurch gekennzeichnet, dass** eine erste Pointeranpassung mit einer ersten niedrigen Frequenzabweichung kompensiert wird und **dass**, falls eine oder mehrere zusätzliche Pointeranpassungen auftreten, bevor die Kompensation der ersten Pointeranpassung beendet worden ist, eine Kompensation mit einer zweiten hohen Frequenzabweichung anschließend ausgeführt wird.

2. Verfahren nach Anspruch 1, **dadurch gekennzeichnet, dass** das regenerierte Taktsignal mittels einer analogen Phasenregelschleife erzeugt wird, wobei ein variables Steuersignal, das einen Phasenunterschied zwischen dem regenerierten Taktsignal und den empfangenen Daten anzeigt, zu einem spannungsgesteuerten Oszillator (12) zugeführt wird, und dass die niedrige Frequenzabweichung erzeugt wird, indem die Variation des Steuersignals auf einen gegebenen Grenzwert begrenzt wird, während die hohe Frequenzabweichung erzeugt wird, indem zugelassen wird, dass die Variation des Steuersignals den gegebenen Grenzwert überschreitet.

3. Verfahren nach Anspruch 1, **dadurch gekennzeichnet, dass** das regenerierte Taktsignal mittels einer digitalen Phasenregelschleife erzeugt wird, wobei ein Steuerwort, das einen von einer Mehrzahl von vorbestimmten diskreten Werten als Antwort auf einen Phasenunterschied zwischen dem regenerierten Taktsignal und einem von den empfangenen Daten hergeleiteten Bezugssignal annehmen kann, zu einem numerisch gesteuerten Oszillator (15) zugeführt wird, wobei das Steuerwort einen nominalen Wert annimmt, wenn der Phasenunterschied kleiner als ein vorbestimmter Wert ist, und einen von den anderen Werten annimmt, wenn der Phasenunterschied numerisch größer als der vorbestimmte Wert ist,

und **dass** die hohe Frequenzabweichung erzeugt wird, indem das Steuerwort fortlaufend einen von den anderen Werten annimmt, während die niedrige Frequenzabweichung erzeugt wird, indem das Steuerwort moduliert wird, so dass es einen von den anderen Werten in Subperioden annimmt, während es den nominalen Wert in Zwischenperioden annimmt.

4. Verfahren nach den Ansprüchen 1-3, **dadurch gekennzeichnet, dass** die niedrige Frequenzabweichung kleiner als ± 0,050 ppm ist.

5. Verfahren nach den Ansprüchen 1-4, **dadurch gekennzeichnet, dass** die hohe Frequenzabweichung höher als ± 4,6 ppm ist.

6. Verfahren zum Desynchronisieren von PDH-Signalen, die über ein SDH-Netzwerk (1) übertragen worden sind, in dem Pointeranpassungen auftreten können, wobei die Pointeranpassungen bei der Desynchronisation mit einer temporären Frequenzabweichung in einem auf der Grundlage der empfangenen PDH-Signale regenerierten Taktsignal kompensiert werden,

**dadurch gekennzeichnet, dass** eine erste Pointeranpassung mit einer ersten niedrigen Frequenzabweichung kompensiert wird und dass, falls eine oder mehrere zusätzliche Pointeranpassungen auftreten, bevor die Kompensation der ersten Pointeranpassung beendet worden ist, eine Kompensation mit einer zweiten hohen Frequenzabweichung anschließend ausgeführt wird.

7. Vorrichtung zum Desynchronisieren von PDH-Signalen, die über ein SDH-Netzwerk (1) übertragen worden sind, in dem Pointeranpassungen auftreten können, wobei die Pointeranpassungen bei der Desynchronisation mit einer temporären Frequenzabweichung in einem auf der Grundlage der empfangenen PDH-Signale regenerierten Taktsignal kompensiert werden,

**dadurch gekennzeichnet, dass** sie angepasst ist, um eine erste Pointeranpassung mit einer ersten niedrigen Frequenzabweichung zu kompensieren und, falls eine oder mehrere zusätzliche Pointeranpassungen auftreten, bevor die Kompensation der ersten Pointeranpassung beendet worden ist, sie angepasst ist, um mit einer zweiten hohen Frequenzabweichung anschließend zu kompensieren.

8. Vorrichtung nach Anspruch 7, **dadurch gekennzeichnet, dass** sie eine analoge Phasenregelschleife zur Erzeugung des regenerierten Taktsignals umfasst, wobei die Phasenregelschleife angepasst ist, um ein variables Steuersignal, das einen Phasenunterschied zwischen dem regenerierten Taktsignal und den empfangenen Daten anzeigt, zu einem spannungsgesteuerten Oszillator (12) zuzuführen,

und **dass** sie angepasst ist, um die niedrige Frequenzabweichung zu erzeugen, indem die Variation des Steuersignals auf einen gegebenen Grenzwert begrenzt ist, und die hohe Frequenzabweichung zu erzeugen, indem zugelassen ist, dass die Variation des Steuersignals den gegebenen Grenzwert überschreitet.

9. Vorrichtung nach Anspruch 7, **dadurch gekennzeichnet, dass** sie eine digitale Phasenregelschleife zur Erzeugung des regenerierten Taktsignals umfasst, wobei die Phasenregelschleife angepasst ist, um ein Steuerwort, das einen von einer Mehrzahl von vorbestimmten diskreten Werten als Antwort auf einen Phasenunterschied zwischen dem regenerierten Taktsignal und einem von den empfangenen Daten hergeleiteten Bezugssignal annehmen kann, zu einem numerisch gesteuerten Oszillator (15) zuzuführen, wobei das Steuerwort einen nominalen Wert annehmen kann, wenn der Phasenunterschied numerisch kleiner als ein vorbestimmter Wert ist, und einen von den anderen Werten annehmen kann, wenn der Phasenunterschied numerisch größer als der vorbestimmte Wert ist,

und **dass** sie angepasst ist, um die hohe Frequenzabweichung zu erzeugen, indem zugelassen ist, dass das Steuerwort fortlaufend einen von den anderen Werten annimmt, und um die niedrige Frequenzabweichung zu erzeugen, indem das Steuerwort moduliert wird, so dass es einen von anderen Werte in Subperioden annimmt, während es den nominalen Wert in Zwischenperioden annimmt.

10. Vorrichtung nach den Ansprüchen 7-9, **dadurch gekennzeichnet, dass** die niedrige Frequenzabweichung kleiner als ± 0,050 ppm ist.

11. Vorrichtung nach den Ansprüchen 7-10, **dadurch gekennzeichnet, dass** die hohe Frequenzabweichung höher als ± 4,6 ppm ist.

**Revendications**

1. Procédé de transfert de signaux de données depuis un premier dispositif PDH (4) par le biais d'un réseau SDH (1) vers un second dispositif PDH (5), dans lequel un signal d'horloge est régénéré dans le second dispositif PDH (5) en fonction des signaux de données reçus, et dans lequel des ajustements de pointeur peuvent se produire dans le réseau SDH (1) et sont compensés dans le second dispositif PDH (5) par un écart de fréquence temporaire dans ledit signal d'horloge régénéré, **caractérisé en ce qu'**un premier ajustement de pointeur est compensé par un premier écart basse fréquence, et **en ce que**, si un ou plusieurs ajustements de pointeur supplémentaires se produisent avant que la compensation du premier ajustement de pointeur soit terminée, la compensation est effectuée par la suite en utilisant un second écart haute fréquence.

2. Procédé selon la revendication 1, **caractérisé en ce que** le signal d'horloge régénéré est produit par le biais d'une boucle à verrouillage de phase analogique, un signal de commande variable indiquant une différence de phase entre le signal d'horloge régénéré et les données reçues étant envoyé vers un oscillateur commandé en tension (12) ;
et **en ce que** l'écart basse fréquence est produit en limitant l'écart dudit signal de commande à une valeur limite donnée, tandis que l'écart haute fréquence est produit en permettant à l'écart du signal de commande de dépasser ladite valeur donnée.

3. Procédé selon la revendication 1, **caractérisé en ce que** le signal d'horloge régénéré est produit par le biais d'une boucle à verrouillage de phase numérique, un mot de commande pouvant adopter une parmi plusieurs valeurs discrètes prédéterminées en réponse à une différence de phase entre le signal d'horloge régénéré et un signal de référence dérivé des données reçues étant envoyé vers un oscillateur commandé numériquement (15), lequel mot de commande adopte une valeur nominale lorsque ladite différence de phase est inférieure à une valeur prédéterminée et adopte une des autres valeurs lorsque la différence de phase est numériquement supérieure à la valeur prédéterminée ;
et **en ce que** l'écart haute fréquence est produit lorsque ledit mot de commande adopte une des autres valeurs continuellement, tandis que l'écart basse fréquence est produit en modulant le mot de commande de sorte qu'il adopte une des autres valeurs pendant des sous-périodes alors qu'il adopte la valeur nominale pendant des périodes intermédiaires.

4. Procédé selon les revendication 1 à 3, **caractérisé**

**en ce que** l'écart basse fréquence est inférieur à ± 0,050 ppm.

5. Procédé selon les revendication 1 à 4, **caractérisé en ce que** l'écart haute fréquence est supérieur à ± 4,6 ppm.

6. Procédé de désynchronisation de signaux PDH qui ont été transférés par le biais d'un réseau SDH (1) dans lequel des ajustements de pointeur peuvent se produire, lesquels ajustements de pointeur sont compensés en désynchronisation par un écart de fréquence temporaire du signal d'horloge régénéré en fonction des signaux PDH reçus, **caractérisé en ce qu'**un premier ajustement de pointeur est compensé par un premier écart basse fréquence, et **en ce que**, si un ou plusieurs ajustements de pointeur supplémentaires se produisent avant que la compensation du premier ajustement de pointeur soit terminée, la compensation est effectuée par la suite en utilisant un second écart haute fréquence.

7. Appareil de désynchronisation de signaux PDH qui ont été transférés par le biais d'un réseau SDH (1) dans lequel des ajustements de pointeur peuvent se produire, lesquels ajustements de pointeur sont compensés en désynchronisation par un écart de fréquence temporaire du signal d'horloge régénéré en fonction des signaux PDH reçus, **caractérisé en ce qu'**il est conçu pour compenser un premier ajustement de pointeur par un premier écart basse fréquence, et, si un ou plusieurs ajustements de pointeur supplémentaires se produisent avant que la compensation du premier ajustement de pointeur soit terminée, pour effectuer une compensation par la suite en utilisant un second écart haute fréquence.

8. Appareil selon la revendication 7, **caractérisé en ce qu'**il comprend une boucle à verrouillage de phase analogique permettant de produire le signal d'horloge régénéré, laquelle boucle à verrouillage de phase est conçue pour envoyer un signal de commande variable indiquant une différence de phase entre le signal d'horloge régénéré et les données reçues vers un oscillateur commandé en tension (12) ;
et **en ce qu'**il est conçu pour produire un écart basse fréquence en limitant l'écart dudit signal de commande à une valeur limite donnée, et pour produire un écart haute fréquence en permettant à l'écart du signal de commande de dépasser ladite valeur donnée.

9. Appareil selon la revendication 7, **caractérisé en ce qu'**il comprend une boucle à verrouillage de phase numérique permettant de produire le signal d'horloge régénéré, laquelle boucle à verrouillage de phase est conçue pour envoyer un mot de commande pouvant adopter une parmi plusieurs valeurs discrètes prédéterminées, en réponse à une différence de phase entre le signal d'horloge régénéré et un signal de référence dérivé des données reçu, vers un oscillateur commandé numériquement (15), lequel mot de commande peut adopter une valeur nominale lorsque ladite différence de phase est numériquement inférieure à une valeur prédéterminée et peut adopter une des autres valeurs lorsque la différence de phase est numériquement supérieure à la valeur prédéterminée ;

et **en ce qu'**il est conçu pour produire l'écart haute fréquence en permettant au dit mot de commande d'adopter une des autres valeurs continuellement, et pour produire l'écart basse fréquence en modulant le mot de commande de sorte qu'il adopte une des autres valeurs pendant des sous-périodes alors qu'il adopte la valeur nominale pendant des périodes intermédiaires.

**10.** Appareil selon les revendications 7 à 9, **caractérisé en ce que** l'écart basse fréquence est inférieur à $\pm$ 0,050 ppm.

**11.** Appareil selon les revendications 7 à 9, **caractérisé en ce que** l'écart haute fréquence est supérieur à $\pm$ 4,6 ppm.

Fig. 1

Fig. 2

Fig. 3

Fig. 4

Fig. 5